# EUROPEAN PATENT APPLICATION

(11) **EP 1 837 394 A1**
(43) Date of publication of application: **26.09.2007**
(21) Application number: 06111502.8
(22) Date of filing: 21.03.2006
(51) Int. Cl.: C11D 3/12

(54) **Cleaning Method**

(71) Applicant: The Procter and Gamble Company, Cincinnati, Ohio 45202 (US)
(72) Inventor: Brooker, Anju Deepali Massey, Newcastle upon Tyne, Tyne and Wear NE3 5 (GB); Somerville Roberts, Nigel Patrick, Newcastle upon Tyne, Tyne and Wear NE20 (GB); York, David William, Newcastle upon Tyne, Tyne and Wear NE20 (GB); Ding, Yulong, Harrogate, Yorkshire HG2 9BE (GB)
(74) Representative: Yorquez Ramirez, Maria Isabel

(57) **Abstract**

Method of removing cooked-, baked-, or burnt-on food soil from cookware and tableware comprising washing the cookware/tableware in an automatic dishwashing machine in the presence of a wash liquor comprising nanoparticles.

## Description

### Technical field

The present invention is in the field of cleaning, in particular it relates to dishwashing and automatic dishwashing products, auxiliaries and methods suitable for the removal of cooked-, baked- and burnt-on soils from cookware and tableware.

### Background of the invention

The removal of soils from surfaces is a permanent challenge. This challenge is more accentuated in the case in which the method of cleaning is automatic dishwashing wherein the compositions used are limited by the technical restrictions imposed by the dishwashing machine. These restrictions impact on the flexibility of formulations. The amount and form of the product dosed into the dishwasher can be limited by the size and shape of the product dispenser. The ingredients used in dishwashing formulations are limited by the way of operation of the machine, limiting the amount and kind of ingredients that can be used in automatic detergent formulations. For example, foaming surfactants cannot be used in automatic dishwashing because the suds will stop or slow down the rotor of the dishwasher negatively impacting on the cleaning performance.

Cooked-, baked- and burnt-on soils are amongst the most severe types of soils to remove from surfaces. During the cooking or baking process or the cooling of food on the plate, some of the food can become dehydrated and often polymerized. After the cooking or eating process the soil or residues can be strongly attached to the surface of the cookware or tableware. These soils are very hard to remove. Traditionally, the removal of cooked-, baked- and burnt-on soils from cookware and tableware requires soaking or pre-treating the soiled object prior to a mechanical action. Apparently, the automatic dishwashing process alone does not provide a satisfactory removal of cooked-, baked- and burnt-on soils.

Compositions and methods for the removal of cooked-, baked- and burnt-on soils from cookware and tableware in an automatic dishwashing machine have been proposed in the prior art, see for example WO 02/08370, but the solutions proposed by this case do not seem to be easy to implement in commercial products.

There is still the need of a method and products for the removal of cooked-, baked- and burnt-on soils from cookware and tableware using an automatic dishwashing machine and avoiding the use of a pre-treatment step.

### Summary of the invention

According to a first aspect of the present invention, there is provided a method of removing cooked-, baked-, or burnt-on food soil (such as grease, meat, dairy, fruit, pasta, scrambled eggs and any other food especially difficult to remove after the cooking process) from cookware and tableware (including stainless steel, glass, plastic, wood and ceramic objects). The method comprises washing the cookware/tableware in an automatic dishwashing machine in the presence of a wash liquor comprising nanoparticles. Preferably, the nanoparticles are in disperse form in the wash liquor, i.e., they do not aggregate.

An automatic dishwashing operation typically comprises three or more cycles: a pre-wash cycle, a main-wash cycle and one or more rinse cycles. For the purpose of this invention "wash liquor" includes any of the aqueous solutions used at any of the dishwasher cycles.

The present inventors have found that using nanoparticles in automatic dishwashing provides excellent soil removal, even in the case of cookware and tableware soiled with tough soils such as cooked-, baked- or burnt-on food soils. It has for example being found that nanoparticles are capable of cleaning soils as difficult as scrambled eggs, baked-on lasagne, roast potatoes, spaghetti, burnt-on grease, etc.

As used herein the term "nanoparticle" means a particle, agglomerate or assembly having a diameter (or equivalent diameter based on the equivalent volume in the case of non-spherical particles, agglomerates or assemblies) of from about 1 nm to about 500 nm, preferably from about 5 to about 300 nm, more preferably from about 5 to about 200 nm. Especially preferred for use herein are nanoparticles having a particle size of less than about 100 nm, more preferably less than about 50 nm. Preferably, the nanoparticles have isotropic or spherical geometry. Disc shape is another preferred geometry for the nanoparticles used herein. In the case of agglomerates or assemblies the primary particles preferably have a size of form about 1 nm to about 100 nm.

In a preferred embodiment the nanoparticles have a weight mean particle size of less than about 500 nm, more preferably less than about 200 nm and even more preferably less than about 100 nm.

The diameter of the nanoparticles may be determined in a well-known manner by light scattering, scanning electron microscopy or by transmission electron microscopy. The weight mean particle size is measured herein using a Malvern Zetasizer Nano-ZS. The particles are in an aqueous solution having a concentration of 0.2% by weight of the solution, at 25°C.

In a preferred embodiment the concentration of nanoparticles in the wash liquor is from about 0.01% to about 5%, more preferably from about 0.05% to about 3% and even more preferably from about 0.1% to about 1% by weight of the wash liquor.

As stated before, it is preferred to maintain the nanoparticles in disperse form within the wash liquor. This may be achieved by different means such as by electrostatic means, steric means, functionalisation of nanoparticles and mixtures thereof. In a preferred embodiment the wash liquor further comprises a steric dispersant. By "steric dispersant" is meant an agent capable of keeping the nanoparticles in disperse form by means of steric effects. The functionalisation of nanoparticles, by for example carboxylation, makes the nanoparticles more stable in the presence of electrolytes.

Electrostatic means includes pH control. Good cleaning performance has been obtained when the wash liquor has a pH greater than about 9, preferably greater than about 10 or a pH lower than about 5, preferably lower than about 4 (as measured at 20°C). In a preferred embodiment the wash liquor has a pH greater than about 9, preferably greater than about 10 and more preferably greater than about 10.5. Wash liquors having a pH of greater than or equal to about 11 are highly preferred for use herein.

In preferred embodiments, the nanoparticles are selected from metal oxides, carbonates and mixtures thereof; preferred metal oxides being titanium dioxide, zinc oxide, cerium oxide and mixtures thereof. Good cleaning results have been obtained with these metal oxides.

The method of the invention is very versatile and the benefits can be achieved by introducing the nanoparticles in the wash liquor of any of the dishwashing cycles. In preferred embodiments the nanoparticles are introduced into the wash liquor of the main-wash cycle; preferably, one or more rinse cycles can be used to deliver finishing agents. In other preferred embodiments the nanoparticles are introduced into the pre-wash or one or more rinse cycles; in these embodiments the main-wash cycle can be used to deliver a conventional detergent.

In preferred embodiments the method of the invention further includes the simultaneous or separate delivery of bleach and/or enzymes into the wash liquor. Nanoparticles and bleach and/or enzymes can be delivered into the same or different dishwashing cycles. Methods in which nanoparticles and bleach are delivery into the same or different wash liquor provide excellent cleaning, preferably at a pH above about 10.5.

### Detailed description of the invention

The present invention envisages a method of automatic dishwashing in a dishwasher wherein the wash liquor comprises nanoparticles, preferably in disperse form. The method provides excellent removal of tough food soils from cookware and tableware. Excellent performances have been achieved when the dishwashing liquor comprises nanoparticles as main soil removal active, i.e, in absence of other cleaning actives (such as enzymes, builders, surfactants, etc). This obviates the use of traditional dishwashing detergents.

Any kind of nanoparticles could be used for the method of the invention, including metal oxides, hydroxides, oxy/hydroxides, particulate water-insoluble polymers, silicates, phosphates and carbonates. Nanoparticles selected from the group consisting of metal oxides are preferred for use herein. Examples include silicon dioxide, aluminium oxide, zirconium oxide, titanium dioxide, cerium oxide, zinc oxide, magnesium oxide, tin oxide, iron oxides (Fe₂0₃, Fe₃O₄) and mixtures thereof

Other nanoparticles suitable for use herein are magnesium silicates, such as Optigel^{™} (Sud-Chemie AG) and Laponite^{™} XLG (Laporte Ltd.).

As stated above, it is preferred to keep the nanoparticles in disperse form (i.e., not forming aggregates of more than 500 nm) in the wash liquor. Nanoparticles in water tend to agglomerate into large particles (i.e., above 500 nm). One way of keeping the nanoparticles in disperse form is by maintaining the zeta potential of the nanoparticles in the wash solution greater or smaller than 0, preferably from about -5 to about -50, more preferably from about - 10 to about -40 millivolts or preferably from about 5 to about 50, more preferably from about 10 to about 40 millivolts. Without wishing to be bound by theory it is believed that these ranges of zeta potential create repulsive charge interactions that keep particles apart thereby providing stabilization of the nanoparticles.

Dispersion of the particles, by electrostatic effects, can be achieved by using acidifying or alkalinity agents. Suitable acidifying agents may be selected from inorganic and or organic acids, including monobasic and polybasic carboxylic acids having 2 to 8 carbon atoms. Examples of these acids include acetic acid, propionic acid, oxalic acid, glutaric acid, maleic acid, succinic acid, phthalic acid, adipic acid, citric acid, malic acid, tartaric acid, etc. Citric acid is preferred for use herein.

The alkalinity agent may be selected from, but is not limited to, a group consisting of alkali hydroxide, alkali hydride, alkali oxide, alkali carbonate, alkali bicarbonate, alkali phosphate, alkali borate, alkali salt of mineral acid, alkali amine, alkaloid, alkali cyanide, alkali metal, and alkali earth metal. Alkali hydroxide, in particular sodium or potassium hydroxide, is an example of the presently preferred alkalinity agent. Other alkalinity agents that tend to increase the pH of a neutral solution are familiar to those in the art, and are within the scope of the present invention.

The nanoparticles in the wash liquor may also be maintained in the form of a dispersion by means of steric effects. This can be achieved by the use of a steric dispersant. Suitable steric dispersants for use herein include phosphated polyesters, acidic polyesters, polyfunctional polymers with anionic/non-ionic character, copolymers with pigment affinic groups, and mixtures thereof. These disperants are commercially available. One preferred class of dispersant is sold under the trademark Disperbyk^{™} by BYK-Chemie USA Inc., Wallingford, Conn., USA. For example, aqueous titania can be stabilized by adding the following: Disperbyk^{™} 110, a solution of a proprietary phosphated polyester; Disperbyk^{™} 111, a proprietary phosphated polyester; Disperbyk^{™} 180, an alkylolammonium salt of an acidic polyester; Disperbyk^{™} 190, a solution of a proprietary polyfunctional polymer with anionic/non-ionic character; Disperbyk^{™} 191, a solution of a proprietary copolymer with pigment affinic groups; and Disperbyk^{™} 192, a solution of a proprietary copolymer with pigment affinic groups.

Other preferred steric dispersants for use herein are selected from the group consisting of polyacrylates and derivatives thereof; polysaccharides and derivatives thereof; polymer gums and combinations thereof. Polyacrylate-type dispersants comprise in particular polyacrylate polymers and copolymers of acrylate and methacrylate. An example of a suitable polyacrylate type dispersant is Carbopol Aqua 30 available from B.F. Goodridge Company.

Examples of polymeric gums which may be used as dispersant herein can be characterized as marine plant, terrestrial plant, microbial polysaccharides and polysaccharide derivatives. Examples of marine plant gums include agar, alginates, carrageenan and furcellaran.

Examples of terrestrial plant gums include guar gum, gum arable, gum tragacenth, karaya gum, locust bean gum and pectin. Examples of microbial polysaccharides include dextran, gellan gum, rhamsan gum, welan gum and xanthan gum. Examples of polysaccharide derivatives include carboxymethyl cellulose, methyl hydroxypropyl cellulose, hydroxy propyl cellulose, hydroxyethyl cellulose, propylene glycol alginate and hydroxypropyl guar. Preferred polymeric gums include pectine, alginate, arabinogalactan (gum Arabic), carrageenan, gellan gum, xanthan gum and guar gum. Specially preferred for use herein is xanthan gum. Another preferred polymeric gum dispersant for use herein is gellan gum.

Gellan gum is a tetrasaccharide repeat unit, containing glucose, glucurronic acid, glucose and rhamrose residues and is prepared by fermentation of Pseudomonaselodea ATCC 31461. Gellan gum is commercially marketed by CP Kelco U.S., Inc. under the KELCOGEL tradename.

Preferably the wash liquor comprises from about 0.001 to about 10%, more preferably from about 0.01 to about 1% by weight of the wash liquor of dispersant.

A dishwashing product suitable for use herein comprises at least 80%, preferably at least 90%, more preferably at least 95% of nanoparticles as soil removal active, by weight of the total removal active. The composition is preferably substantially free (i.e., less than 5%, more preferably less than 2% by weight of soil removal active) of other soil removal actives.

The composition can additionally comprise auxiliary components such as solvents, stabilizing agents, viscosity regulators, modifiers, dyes, perfumes, finishing agents (such as shine enhancers, care agents, etc). Products of this kind can be provided in liquid form or in the form of capsules, pouches or sachets. The terms "capsules, pouches and sachets" herein include both flexible and non-flexible walled products in unit dose form in which a cleaning composition is enveloped, i.e., surrounded by, a water-soluble material, preferably in the form of a film.

Compositions in liquid form can be autodosed into the dishwashing process by for example having a reservoir, inside the dishwasher, containing a highly concentrated nanoparticle composition which is automatically delivered into the desired cycle (pre-wash, main wash or rinse) of the dishwashing process. Preferably, the nanoparticle composition stored in the autodosing device is highly concentrated, i.e, more than about 10%, preferably more than about 20% and even more preferably more than about 35% by weight of the composition. Alternatively, the nanoparticles can be made in situ, by for example starting from a soluble metal salt solution and altering the pH in the wash liquor. This would avoid the need of keeping the nanoparticles stabilized into the autodosing reservoir. The reservoir may have a volume such that allows the storage of a composition for a single dose or for a plurality of doses. Autodosing can also be used in the case of compositions in solid form or unit dose form.

When the nanoparticle composition is in liquid form the nanoparticles are usually dispersed. The composition can be aqueous or non-aqueous, preferred for use herein are aqueous dispersions. Preferably the liquid composition comprises at least 5%, more preferably at least 10% and even more preferably at least 40% by weight of the composition of nanoparticles. It is also preferred that the nanoparticles do not aggregate to form larger particles (ie., particles with a size above the nanoscale range), because aggregation can negatively impact on cleaning properties.

The nanoparticle composition can alternatively be in the form of a solid composition. The solid composition can be in powder, tablet or any other solid form. If in tablet form the nanoparticles can be uniformly distributed in the tablet matrix, for example in a detergent matrix, or they can be part of a separate region, such as dimple, layer or insert.

The nanoparticles can be processed into solid form by for example starting from an aqueous solution. This solution is pre-dispersed, for example in a mixer, to prevent aggregation of the nanoparticles and that mixture is dried. The operation of removing water/drying from the dispersion may be carried out according to any means known to a person skilled in the art, in particular by freeze-drying or preferably by spray-drying. The spray-drying may be carried out in any known apparatus, such as spray-drying tower, using nozzles or a turbine to produce a hot air stream. The implementation conditions depend on the type of components used; these conditions are generally such that the temperature of the whole of the product during drying is at least 30°C and does not exceed 150°C.

An alternative way to have nanoparticles in solid form is by spraying a pre-disperse solution of nanoparticles onto a powder. The powder should be water-soluble, releasing the nanoparticles in the wash liquor. The powder may be an inert material or a detergent active. A preferred powder for use herein is phosphate, in particular sodium or potassium tripolyphosphate and mixtures thereof

The nanoparticle composition can be used in a cleaning process as the only soil removal active or in combination with detergent ingredients or fully formulated detergents. The composition can be provided as an additive that can be added to dishwashing processes with heavily soiled loads or as part of a detergent.

A preferred product execution in which the nanoparticle composition forms part of the detergent is a multi-compartment pouch, especially a pouch having at least one compartment comprising a liquid comprising nanoparticles. Especially preferred are multi-compartment pouches comprising a compartment comprising a liquid composition and a compartment comprising a solid composition. Other suitable multi-compartment pouches comprise different liquid compositions in different compartments.

Preferred manufacturing methods for unit dose executions are described in WO 02/42408. Any water-soluble film-forming polymer which is compatible with the compositions of the invention and which allows the delivery of the composition into the wash liquor of a dishwasher can be used herein. Polyvinyl alcohol is the preferred film-forming polymer for use herein.

Single compartment pouches can be made by placing a first piece of film in a mould, drawing the film by vacuum means to form a pocket, filling the formed pocket with a cleaning composition and placing and sealing the formed pocket with another piece of film.

Solid-liquid multi-compartment pouches can be made by placing a first piece of film in a mould, drawing the film by vacuum means to form a pocket, pinpricking the film, dosing and tamping the powder composition, placing a second piece of film over the first pocket to form a new pocket, filling the new pocket with the liquid composition, placing a piece of film over this liquid filled pocket and sealing the three films together to form the dual compartment pouch. Nanoparticles can be part of the solid composition, the liquid composition or both.

The nanoparticles can also be supported or embedded on a substrate such as a film, in particular a water-soluble film, the film can then be used to make pouches, capsules or sachets containing detergent compositions. Alternatively, the film can be cut into small pieces and they can be introduced into a detergent composition.

As well as compositions comprising nanoparticles as main cleaning actives, nanoparticles can be also used in combination with detergent actives. A preferred combination includes compositions comprising nanoparticles and bleach. This kind of compositions seems to produce good cleaning results. Good cleaning results are also obtained with compositions comprising nanoparticles and enzymes. Good results have also been obtained when nanoparticles, bleach and/or enzymes are delivered into different cycles of the dishwashing operation.

Some oxide materials, especially in their crystalline form, can be photoactivated in order to provide bleaching benefits, this can be achieved by having a light source in the interior of the dishwasher. Thus, in a prefer method embodiment light is provided to the wash liquor containing the nanoparticles. Preferred nanoparticles for use in this embodiment are zinc oxide, titanium dioxide in its anatase form and mixtures thereof

### Cleaning actives

Any traditional cleaning ingredients can be used in the method of the invention and in the compositions described herein.

### Bleach

Inorganic and organic bleaches are suitable cleaning actives for use herein. Inorganic bleaches include perhydrate salts such as perborate, percarbonate, perphosphate, persulfate and persilicate salts. The inorganic perhydrate salts are normally the alkali metal salts. The inorganic perhydrate salt may be included as the crystalline solid without additional protection. Alternatively, the salt can be coated.

Alkali metal percarbonates, particularly sodium percarbonate are preferred perhydrates for use herein. The percarbonate is most preferably incorporated into the products in a coated form which provides in-product stability. A suitable coating material providing in product stability comprises mixed salt of a water-soluble alkali metal sulphate and carbonate. Such coatings together with coating processes have previously been described in GB- 1,466,799. The weight ratio of the mixed salt coating material to percarbonate lies in the range from 1: 200 to 1: 4, more preferably from 1: 99 to 1 9, and most preferably from 1: 49 to 1: 19. Preferably, the mixed salt is of sodium sulphate and sodium carbonate which has the general formula Na2S04.n.Na2CO3 wherein n is from 0. 1 to 3, preferably n is from 0.3 to 1.0 and most preferably n is from 0.2 to 0.5.

Another suitable coating material providing in product stability, comprises sodium silicate of Si02: Na20 ratio from 1.8: 1 to 3.0: 1, preferably L8:1 to 2.4:1, and/or sodium metasilicate, preferably applied at a level of from 2% to 10%, (normally from 3% to 5%) Of Si02 by weight of the inorganic perhydrate salt. Magnesium silicate can also be included in the coating. Coatings that contain silicate and borate salts or boric acids or other inorganics are also suitable.

Other coatings which contain waxes, oils, fatty soaps can also be used advantageously within the present invention.

Potassium peroxymonopersulfate is another inorganic perhydrate salt of utility herein.

Typical organic bleaches are organic peroxyacids including diacyl and tetraacylperoxides, especially diperoxydodecanedioc acid, diperoxytetradecanedioc acid, and diperoxyhexadecanedioc acid. Dibenzoyl peroxide is a preferred organic peroxyacid herein.

Mono- and diperazelaic acid, mono- and diperbrassylic acid, and Nphthaloylaminoperoxicaproic acid are also suitable herein.

The diacyl peroxide, especially dibenzoyl peroxide, should preferably be present in the form of particles having a weight average diameter of from about 0.1 to about 100 microns, preferably from about 0.5 to about 30 microns, more preferably from about 1 to about 10 microns. Preferably, at least about 25%, more preferably at least about 50%, even more preferably at least about 75%, most preferably at least about 90%, of the particles are smaller than 10 microns, preferably smaller than 6 microns. Diacyl peroxides within the above particle size range have also been found to provide better stain removal especially from plastic dishware, while minimizing undesirable deposition and filming during use in automatic dishwashing machines, than larger diacyl peroxide particles. The preferred diacyl peroxide particle size thus allows the formulator to obtain good stain removal with a low level of diacyl peroxide, which reduces deposition and filming. Conversely, as diacyl peroxide particle size increases, more diacyl peroxide is needed for good stain removal, which increases deposition on surfaces encountered during the dishwashing process.

Further typical organic bleaches include the peroxy acids, particular examples being the alkylperoxy acids and the arylperoxy acids. Preferred representatives are (a) peroxybenzoic acid and its ring-substituted derivatives, such as alkylperoxybenzoic acids, but also peroxy-α-naphthoic acid and magnesium monoperphthalate, (b) the aliphatic or substituted aliphatic peroxy acids, such as peroxylauric acid, peroxystearic acid, ε-phthalimidoperoxycaproic acid[phthaloiminoperoxyhexanoic acid (PAP)], o-carboxybenzamidoperoxycaproic acid, N-nonenylamidoperadipic acid and N-nonenylamidopersuccinates, and (c) aliphatic and araliphatic peroxydicarboxylic acids, such as 1,12-diperoxycarboxylic acid, 1,9-diperoxyazelaic acid, diperoxysebacic acid, diperoxybrassylic acid, the diperoxyphthalic acids, 2-decyldiperoxybutane-1,4-dioic acid, N,N-terephthaloyldi(6-aminopercaproic acid).

### Bleach activators

Bleach activators are typically organic peracid precursors that enhance the bleaching action in the course of cleaning at temperatures of 60° C and below. Bleach activators suitable for use herein include compounds which, under perhydrolysis conditions, give aliphatic peroxoycarboxylic acids having preferably from 1 to 10 carbon atoms, in particular from 2 to 4 carbon atoms, and/or optionally substituted perbenzoic acid. Suitable substances bear O-acyl and/or N-acyl groups of the number of carbon atoms specified and/or optionally substituted benzoyl groups. Preference is given to polyacylated alkylenediamines, in particular tetraacetylethylenediamine (TAED), acylated triazine derivatives, in particular 1,5-diacetyl-2,4-dioxohexahydro-1,3,5-triazine (DADHT), acylated glycolurils, in particular tetraacetylglycoluril (TAGU), N-acylimides, in particular N-nonanoylsuccinimide (NOSI), acylated phenolsulfonates, in particular n-nonanoyl- or isononanoyloxybenzenesulfonate (nor iso-NOBS), carboxylic anhydrides, in particular phthalic anhydride, acylated polyhydric alcohols, in particular triacetin, ethylene glycol diacetate and 2,5-diacetoxy-2,5-dihydrofuran and also triethylacetyl citrate (TEAC).

### Bleach catalyst

Bleach catalysts preferred for use herein include the manganese triazacyclononane and related complexes (US-A-4246612, US-A-5227084); Co, Cu, Mn and Fe bispyridylamine and related complexes (US-A-5114611); and pentamine acetate cobalt(III) and related complexes(US-A-4810410). A complete description of bleach catalysts suitable for use herein can be found in WO 99/06521, pages 34, line 26 to page 40, line 16.

### Surfactant

A preferred surfactant for use in automatic dishwashing is low foaming by itself or in combination with other components (i.e. suds suppressers). Preferred for use herein are low and high cloud point nonionic surfactants and mixtures thereof including nonionic alkoxylated surfactants (especially ethoxylates derived from C₆-C_{I8} primary alcohols), ethoxylated-propoxylated alcohols (e.g., Olin Corporation's Poly-Tergent® SLF18), epoxy-capped poly(oxyalkylated) alcohols (e.g., Olin Corporation's Poly-Tergent® SLF18B - see WO-A-94/22800), ether-capped poly(oxyalkylated) alcohol surfactants, and block polyoxyethylene-polyoxypropylene polymeric compounds such as PLURONIC®, REVERSED PLURONIC®, and TETRONIC® by the BASF-Wyandotte Corp., Wyandotte, Michigan; amphoteric surfactants such as the C₁₂-C₂₀ alkyl amine oxides (preferred amine oxides for use herein include lauryldimethyl amine oxide and hexadecyl dimethyl amine oxide), and alkyl amphocarboxylic surfactants such as Miranol^{™} C2M; and zwitterionic surfactants such as the betaines and sultaines; and mixtures thereof. Surfactants suitable herein are disclosed, for example, in US-A-3,929,678 , US-A- 4,259,217, EP-A-0414 549, WO-A-93/08876 and WO-A-93/08874. Surfactants are typically present at a level of from about 0.2% to about 30% by weight, more preferably from about 0.5% to about 10% by weight, most preferably from about 1% to about 5% by weight of a detergent composition. Preferred surfactant for use herein are low foaming and include low cloud point nonionic surfactants and mixtures of higher foaming surfactants with low cloud point nonionic surfactants which act as suds suppresser therefor.

### Builder

Builders suitable for use herein include water-soluble builders such as citrates, carbonates, silicate and polyphosphates e.g. sodium tripolyphosphate and sodium tripolyphosphate hexahydrate, potassium tripolyphosphate and mixed sodium and potassium tripolyphosphate salts.

### Enzyme

Enzymes suitable herein include bacterial and fungal cellulases such as Carezyme and Celluzyme (Novo Nordisk A/S); peroxidases; lipases such as Amano-P (Amano Pharmaceutical Co.), M1 Lipase^{R} and Lipomax^{R} (Gist-Brocades) and Lipolase^{R} and Lipolase Ultra^{R} (Novo); cutinases; proteases such as Esperase^{R}, Alcalase^{R}, Durazym^{R} and Savinase^{R} (Novo) and Maxatase^{R}, Maxacal^{R}, Properase^{R} and Maxapem^{R} (Gist-Brocades); α and β amylases such as Purafect Ox Am^{R} (Genencor) and Termwnyl^{R}, Ban^{R}, Fungwnyl^{R}, Durwnyl^{R}, and Natalase^{R} (Novo); pectinases; and mixtures thereof. Enzymes are preferably added herein as prills, granulates, or cogranulates at levels typically in the range from about 0.0001 % to about 2% pure enzyme by weight of the cleaning composition.

### Low cloud point non-ionic surfactants and suds suppressers

The suds suppressers suitable for use herein include nonionic surfactants having a low cloud point. "Cloud point", as used herein, is a well known property of nonionic surfactants which is the result of the surfactant becoming less soluble with increasing temperature, the temperature at which the appearance of a second phase is observable is referred to as the "cloud point" (See Kirk Othmer, pp. 360-362). As used herein, a "low cloud point" nonionic surfactant is defined as a nonionic surfactant system ingredient having a cloud point of less than 30° C., preferably less than about 20° C., and even more preferably less than about 10° C., and most preferably less than about 7.5° C. Typical low cloud point nonionic surfactants include nonionic alkoxylated surfactants, especially ethoxylates derived from primary alcohol, and polyoxypropylene/polyoxyethylene/polyoxypropylene (PO/EO/PO) reverse block polymers. Also, such low cloud point nonionic surfactants include, for example, ethoxylated-propoxylated alcohol (e.g., BASF Poly-Tergent® SLF18) and epoxy-capped poly(oxyalkylated) alcohols (e.g., BASF Poly-Tergent® SLF18B series of nonionics, as described, for example, in US-A-5,576,281).

Preferred low cloud point surfactants are the ether-capped poly(oxyalkylated) suds suppresser having the formula: 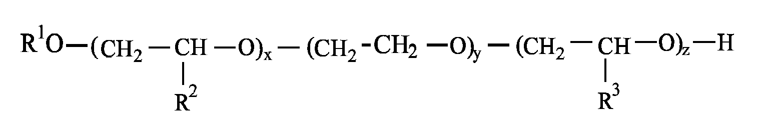 wherein R¹ is a linear, alkyl hydrocarbon having an average of from about 7 to about 12 carbon atoms, R² is a linear, alkyl hydrocarbon of about 1 to about 4 carbon atoms, R³ is a linear, alkyl hydrocarbon of about 1 to about 4 carbon atoms, x is an integer of about 1 to about 6, y is an integer of about 4 to about 15, and z is an integer of about 4 to about 25.

Other low cloud point nonionic surfactants are the ether-capped poly(oxyalkylated) having the formula:

R_{I}O(R_{II}O)ₙCH(CH₃)OR_{III}

wherein, R_{I} is selected from the group consisting of linear or branched, saturated or unsaturated, substituted or unsubstituted, aliphatic or aromatic hydrocarbon radicals having from about 7 to about 12 carbon atoms; R_{II} may be the same or different, and is independently selected from the group consisting of branched or linear C₂ to C₇ alkylene in any given molecule; n is a number from 1 to about 30; and R_{III} is selected from the group consisting of:
(i) a 4 to 8 membered substituted, or unsubstituted heterocyclic ring containing from 1 to 3 hetero atoms; and
(ii) linear or branched, saturated or unsaturated, substituted or unsubstituted, cyclic or acyclic, aliphatic or aromatic hydrocarbon radicals having from about 1 to about 30 carbon atoms;
(b) provided that when R² is (ii) then either: (A) at least one of R¹ is other than C₂ to C₃ alkylene; or (B) R² has from 6 to 30 carbon atoms, and with the further proviso that when R² has from 8 to 18 carbon atoms, R is other than C₁ to C₅ alkyl.

Other suitable components herein include organic polymers having anti-redeposition, soil release or other detergency properties. Preferred anti-redeposition polymers herein include acrylic acid containing polymers such as Sokalan PA30, PA20, PA15, PA10 and Sokalan CP10 (BASF GmbH), Acusol 45N, 480N, 460N (Rohm and Haas), acrylic acid/maleic acid copolymers such as Sokalan CP5 and acrylic/methacrylic copolymers. Preferred soil release polymers herein include alkyl and hydroxyalkyl celluloses (US-A-4,000,093), polyoxyethylenes, polyoxypropylenes and copolymers thereof, and nonionic and anionic polymers based on terephthalate esters of ethylene glycol, propylene glycol and mixtures thereof.

Heavy metal sequestrants and crystal growth inhibitors are also suitable for use herein, for example diethylenetriamine penta (methylene phosphonate), ethylenediamine tetra(methylene phosphonate) hexamethylenediamine tetra(methylene phosphonate), ethylene diphosphonate, hydroxy-ethylene-1,1-diphosphonate, nitrilotriacetate, ethylenediaminotetracetate, ethylenediamine-N,N'-disuccinate in their salt and free acid forms.

Suitable for use herein is also a corrosion inhibitor such as organic silver coating agents (especially paraffins such as Winog 70 sold by Wintershall, Salzbergen, Germany), nitrogen-containing corrosion inhibitor compounds (for example benzotriazole and benzimadazole - see GB-A-1137741) and Mn(II) compounds, particularly Mn(II) salts of organic ligands.

Other suitable components herein include enzyme stabilizers such as calcium ion, boric acid and propylene glycol.

## Claims

1. A method of removing cooked-, baked-, or burnt-on food soil from cookware and tableware comprising washing the cookware/tableware in an automatic dishwashing machine in the presence of a wash liquor comprising nanoparticles.

2. A method according to claim 1 wherein the nanoparticles have a weight mean particle size of less than about 100 nm.

3. A method according to claim 1 or 2 wherein the concentration of the nanoparticles in the wash liquor is from about 0.1 to about 5% by weight of the wash liquor.

4. A method according to any preceding claim wherein the wash liquor further comprises a steric dispersant.

5. A method according to any preceding claim wherein the pH of the wash liquor, as measured at 20°C, is at least about 9.

6. A method according to any preceding claim wherein the nanoparticles are selected from metal oxides.

7. A method according to claim 6 wherein the nanoparticles are selected from titanium dioxide, zinc oxide, cerium oxide and mixtures thereof.

8. A method according to any preceding claim wherein nanoparticles are delivered into the wash liquor during the pre-wash, main wash or rinse cycle.

9. A method according to any preceding claim wherein the soil is scrambled eggs.

10. A method according to any preceding claim wherein the method further comprises the simultaneous or separate delivery of bleach into the wash liquor.

11. A method according to any preceding claim wherein the method further comprises the simultaneous or separate delivery of enzymes into the wash liquor.
